# EUROPÄISCHE PATENTANMELDUNG

(11) **EP 2 520 736 A1**
(43) Veröffentlichungstag der Anmeldung: **07.11.2012**
(21) Anmeldenummer: 12161436.6
(22) Anmeldetag: 27.03.2012
(51) Int. Cl.: E04F 13/16, E04F 13/08, E04F 15/10, E04F 15/02, B29C 47/00, E04C 2/32

(54) **Wand- oder Bodenpaneel mit gerippter Oberfläche**

(30) Priorität: 04.05.2011 DE 102011050098
(71) Anmelder: Novo-Tech GmbH & Co. KG, 06449 Aschersleben (DE)
(72) Erfinder:
(74) Vertreter: Dantz, Jan Henning

(57) **Zusammenfassung**

Ein Paneel (1, 1') für einen Boden- oder Wandbelag aus einem extrudierten Formkörper aus einer Mischung aus Naturfasern und einem Polymerwerkstoff, umfasst mindestens an einer Oberfläche eine Vielzahl parallel angeordneter Rippen (3, 3', 3", 10) aufweist, wobei die Rippen (3, 3', 3", 10) eine nach außen gewölbte Oberfläche (5, 5', 5") besitzen, wobei die Wölbung der Rippen (3, 3', 3", 10) einen Radius von mehr als 10 mm aufweist. Dadurch besitzt das Paneel (1, 1') eine besonders ergonomische Trittfläche und ermöglicht zudem ein effektives Ablaufen von Feuchtigkeit.

## Beschreibung

Die vorliegende Erfindung betrifft ein Paneel für einen Boden- oder einen Wandbelag aus einem extrudierten Formkörper aus einer Mischung aus Naturfasern und einem Polymerwerkstoff, wobei das Paneel an mindestens einer Oberfläche eine Vielzahl parallel angeordneter Rippen aufweist.

Die EP 1 524 385 offenbart eine Platte bzw. ein Paneel für einen Bodenbelag, das aus einem extrudierten Formkörper aus einer Mischung aus Naturfasern und Kunststoff hergestellt ist. Das Paneel weist an gegenüberliegenden Längsseiten ein integral ausgebildetes Verriegelungssystem auf und besitzt sowohl an der Oberseite als auch an der Unterseite eine begehbare Oberfläche, in die eine unterschiedliche Profilierung einextrudiert ist. Diese Paneele haben sich in der Praxis bewährt und werden meist für den Außenbereich an Terrassen eingesetzt. Die rutschhemmende Profilierung mit den parallel verlaufenden Rippen besitzt allerdings das Problem, dass bei der Begehung barfuß die Kanten der Rippen spürbar sind. Zudem können sich die Rippen bei Sonneneinstrahlung stark aufheizen.

Es ist daher Aufgabe der vorliegenden Erfindung, ein Paneel für einen Wand-oder Bodenbelag zu schaffen, das mindestens eine besonders ergonomisch ausgestaltete Oberfläche besitzt und ein effektives Ablaufen von Flüssigkeit ermöglicht.

Diese Aufgabe wird mit einem Paneel mit den Merkmalen des Anspruches 1 gelöst.

Erfindungsgemäß umfasst das Paneel an mindestens einer Oberfläche eine Vielzahl parallel angeordneter Rippen mit einer nach außen gewölbten Oberfläche, wobei die Wölbung der Rippen einen Radius von mehr als 10 mm aufweist. Dadurch besitzen die Rippen eine ergonomische Oberfläche, die auch barfuß gut begehbar ist. Bei der Begehung werden keine Kanten spürbar, da die Wölbung sich an die Trittfläche des Fußes anschmiegt. Durch die Ausbildung von Rippen mit der gewölbten Oberfläche kann zudem eine gewisse rutschhemmende Wirkung beibehalten werden, wobei die Feuchtigkeit sich zwischen den Rippen ansammelt und dann abfließen kann. Durch die gewölbte Oberfläche wird auch verhindert, dass sich Tropfen ansammeln und die Oberfläche dadurch rutschig wird.

Gemäß einer bevorzugten Ausgestaltung der Erfindung besitzt die Wölbung der Rippen einen Radius von mehr als 14 mm, beispielsweise mehr als 16 mm. Dadurch wird eine besonders sanfte Auswölbung bereitgestellt. Die Wölbung der Rippen kann in einem Bereich zwischen 10 mm bis 40 mm, insbesondere zwischen 15 mm bis 30 mm, liegen.

Gemäß einer bevorzugten Ausgestaltung der Erfindung sind benachbarte Rippen jeweils über eine Nut voneinander getrennt. Die Nut kann dabei einen verjüngten Halsabschnitt aufweisen und sich zu einem Nutboden hin aufweiten. Durch die Nut wird ein besonders effektiver Ablauf von Flüssigkeit ermöglicht, da sich die Flüssigkeit von der gewölbten Oberfläche der Rippen in die Nut leiten lässt und in der Nut durch ein geringes Gefälle dann abfließen kann. Zudem besitzt die Nut den Vorteil, dass bei Anordnung eines verjüngten Halsabschnittes und einer Aufweitung zu einem Nutboden hin eine Verschattung der Nut vorhanden ist, die für eine Kühlung sorgt, denn der Bereich unterhalb des verjüngten Halsausschnittes wird bei Sonneneinstrahlung nicht erhitzt und kann zudem belüftet werden. Dadurch kann die Oberflächentemperatur an der gewölbten Oberfläche der Rippen reduziert werden, was gerade in heißeren Gebieten und an Sommertagen vorteilhaft ist.

Die Nut ist vorzugsweise im Wesentlichen pilzkopfförmig ausgebildet, wobei die Breite der Nut im Bereich des Halsabschnittes beispielsweise weniger als 60 %, insbesondere weniger als 50 %, der Breite der Nut zwischen Nutboden und Halsabschnitt ist. Dadurch erfolgt eine erhebliche Aufweitung benachbart zu dem verjüngten Halsabschnitt, so dass die Effekte der Kühlung und des einfachen Ablaufes von Flüssigkeit verbessert werden. Der Nutboden kann dabei gerundet ausgebildet sein, so dass sich Feuchtigkeit immer an der tiefsten Stelle des Nutbodens sammelt und dann abfließen kann.

Um die Spalte zwischen benachbarten Rippen gering zu halten, ist die Breite des verjüngten Halsabschnittes an einer Nut vorzugsweise kleiner als 10 mm, insbesondere kleiner als 7 mm. Der Halsabschnitt kann beispielsweise zwischen 3 mm und 6 mm breit sein. Dadurch ist es auch möglich, benachbarte Paneele an ihren Längskanten so anzuordnen, dass der Übergang von einem Paneel zum benachbarten Paneel nicht sichtbar ist. Dann muss der Spalt zwischen zwei benachbarten Paneelen etwa gleich groß gewählt sein, wie der Spalt durch den verjüngten Halsabschnitt einer Nut.

Gemäß einer weiteren Ausgestaltung der Erfindung sind die Rippen im Querschnitt im Wesentlichen pilzkopfförmig ausgebildet. Die Breite eines Kopfes einer Rippe ist vorzugsweise mehr als 30 %, insbesondere mehr als 40 %, breiter als ein Stützsteg eines Kopfabschnittes der Rippe. Durch die im Querschnitt pilzkopfförmigen Rippen lässt sich bezogen auf das Volumen des Paneels der Materialeinsatz effektiv nutzen, da innerhalb des Paneels Hohlräume durch die nach außen offenen Nuten gebildet sind.

Das Paneel weist vorzugsweise auf der zu der Oberfläche gegenüberliegenden Seite ebenfalls eine Vielzahl parallel angeordneter Rippen auf, die eine nach außen gewölbte Oberfläche besitzen. Dadurch kann das Paneel wahlweise mit der ersten Oberfläche oder der gegenüberliegenden zweiten Oberfläche nach oben verlegt werden, so dass mit einem Paneel unterschiedliche Beläge verlegt werden können, je nachdem welche Oberfläche als begehbare bzw. sichtbare Fläche nach oben angeordnet wird. Bei dem Paneel können dabei an gegenüberliegenden Seiten im Querschnitt pilzkopfförmige Rippen vorgesehen sein, die integral mit einem Mittelsteg ausgebildet sind. Der Mittelsteg kann dabei eine Dicke von weniger als 9 mm, insbesondere weniger als 7 mm, aufweisen, so dass mit geringem Materialeinsatz ein ausreichend stabiles Paneel mit großem Volumen hergestellt wird.

Statt einer im Wesentlichen pilzkopfförmigen Kontur können die Rippen auch über eine konkave Wölbung miteinander verbunden sein.- Der Radius der konkaven Wölbung ist dabei vorzugsweise weniger als 60 %, insbesondere weniger als 50 % so groß wie der Radius der konvexen Wölbung nach außen an den Rippen.

Um eine haptisch besonders angenehme Oberfläche zu erhalten, ist die Oberfläche der Rippen vorzugsweise gebürstet. Dadurch wird die Rauheit an der Oberfläche erhöht, was auch die Rutschfestigkeit verbessert.

Die Erfindung wird nachfolgend anhand von zwei Ausführungsbeispielen mit Bezug auf die beigefügten Zeichnungen näher erläutert. Es zeigen:
- Figur 1: eine perspektivische Ansicht eines ersten Ausführungsbeispiels eines erfindungsgemäßen Paneels;
- Figur 2: eine Querschnittsansicht des Paneels der Figur 1;
- Figur 3: eine perspektivische Ansicht eines zweiten Ausführungsbeispiels eines erfindungsgemäßen Paneels, und
- Figur 4: eine Querschnittsansicht des Paneels der Figur 3.

Ein Paneel 1 ist im Wesentlichen plattenförmig ausgebildet und umfasst an gegenüberliegenden Längsseiten eine Nut 2. Das Paneel 1 ist aus einer Mischung aus Naturfasern und einem Polymerwerkstoff hergestellt, wobei die Naturfasern aus Holzfasern, Holzspänen, Stroh, Heu, Reisschalen oder anderen lignozellulosehaltigen Materialien bestehen. Als Polymerwerkstoff kann Polypropylen oder Polyethylen oder ein anderer Polymerwerkstoff eingesetzt werden. Der Anteil an Naturfasern beträgt vorzugsweise über 50 %, insbesondere zwischen 60 % und 85 %.

An einer Oberfläche des Paneels 1 befindet sich eine Vielzahl parallel angeordneter Rippen 3, die sich über die gesamte Oberfläche bis zu den Längskanten erstrecken. Zwischen den Rippen 3 sind Nuten 4 ausgebildet. Jede Rippe 3 umfasst eine nach außen gewölbte konvexe Oberfläche 5, wobei der Radius der Wölbung der Oberfläche 5 in einem Bereich zwischen 10 mm und 30 mm, insbesondere 14 mm und 20 mm, liegt. Die gewölbte Oberfläche 5 der Rippen 3 ist dabei deutlich breiter als ein Halsabschnitt 6 einer Nut 4, die lediglich eine Breite b zwischen 3 mm und 7 mm, insbesondere 4 mm und 6 mm, aufweist. Jede Nut 4 weitet sich von dem verjüngten Halsabschnitt 6 zu einem Nutboden 7 hin auf, wobei die Nut 4 in einem Bereich zwischen dem Nutboden 7 und dem verjüngten Halsabschnitt 6 eine maximale Breite B aufweist, die mehr als doppelt so groß ist wie die Breite b des verjüngten Halsabschnittes 6 und in einem Bereich zwischen 10 mm und 17 mm, insbesondere 12 mm bis 15 mm, liegt. Der Nutboden 7 ist dabei gewölbt ausgebildet, so dass in die Nut 4 eintretende Flüssigkeit sich an der tiefsten Stelle des Nutbodens 7 sammelt und dann abfließen kann.

Die Rippen 3 besitzen dadurch eine im Wesentlichen pilzkopfförmige Querschnittskontur, wobei jede Rippe 3 einen Kopfabschnitt 9 aufweist, dessen Breite L größer als 10 mm ist, vorzugsweise zwischen 11 und 17 mm liegt, während ein Stützsteg 8 lediglich eine Breite I von 5 mm bis 9 mm aufweist, also weniger als 60 % der Breite L des Kopfabschnittes 9. Die Stützstege 8 der Rippen 3 sind in dem mittleren Bereich dabei mittig zu dem Kopfabschnitt 9 angeordnet, während die an den Längskanten angeordneten Rippen 3 einen nach innen versetzt angeordneten Stützsteg 19 aufweisen, damit randseitig eine Nut 2 für die Festlegung des Paneels 1 an einem Untergrund ausgespart werden kann. Das Paneel 1 weist auf der zu der Oberfläche mit den Rippen 3 gegenüberliegenden Seite weitere Rippen 10 auf, die allerdings nicht über eine Nut voneinander beabstandet sind. Diese Rippen 10 sind über eine konkave Wölbung 11 miteinander verbunden, wobei der Radius der konkaven Wölbung 11 um mehr als 30 %, vorzugsweise mehr als 40 %, kleiner ist als der Radius der konvexen Wölbung der Rippen 10. Dadurch kann der Benutzer wahlweise die Rippen 3 nach oben verlegen oder die Rippen 10, je nachdem, welche Oberfläche optisch und haptisch als angenehmer empfunden wird. Falls die Reinigung der Nuten 4 als störend empfunden würde, können die Rippen 10 nach oben verlegt werden, da die Reinigung der konkaven Wölbung 11 problemlos möglich ist.

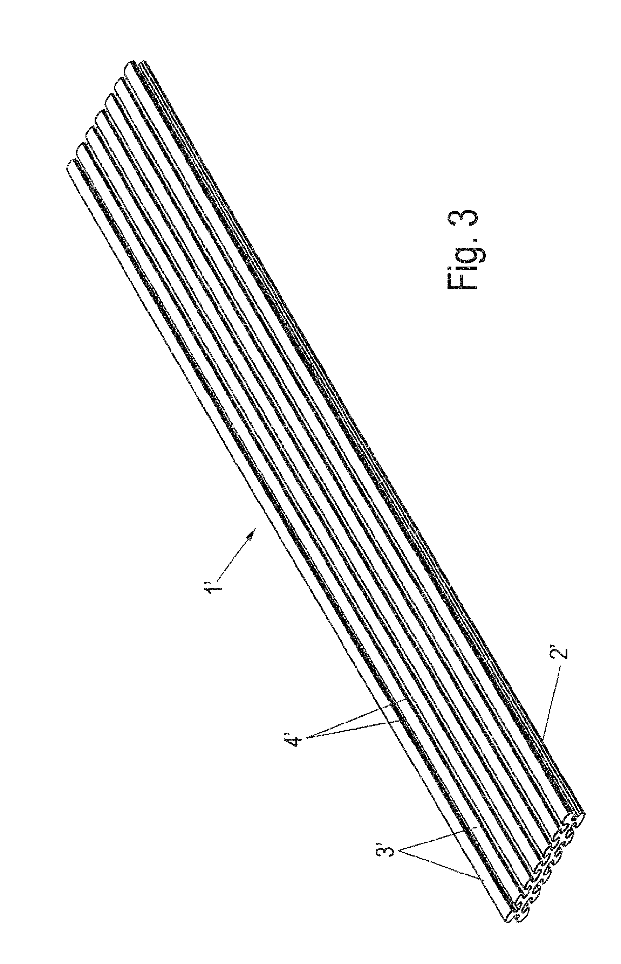

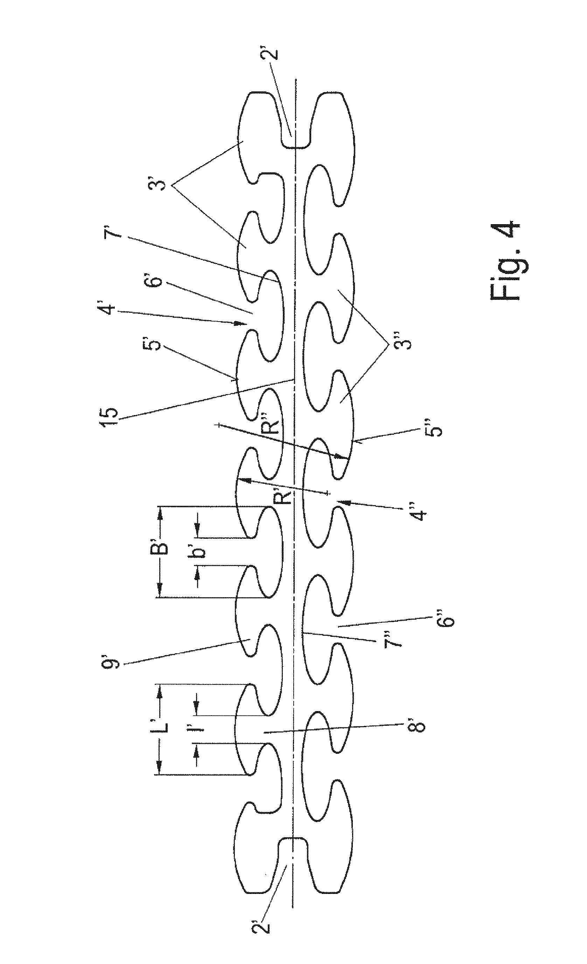

In den Figuren 3 und 4 ist eine zweite Ausführungsform eines erfindungsgemäßen Paneels 1' gezeigt, das ebenfalls aus einem Formkörper aus einer Mischung aus Naturfasern und einen Polymerwerkstoff extrudiert ist. Der Formkörper ist plattenförmig ausgebildet und umfasst an gegenüberliegenden Längskanten Nuten 2' für die Fixierung an einem Untergrund. An einer Oberseite sind eine Vielzahl von Rippen 3' ausgebildet, die über Nuten 4' voneinander beabstandet sind.

Die Rippen 3' sind im Querschnitt im Wesentlichen pilzkopfförmig ausgebildet und weisen einen Stützsteg 8' sowie einen Kopfabschnitt 9' auf, wobei die Breite I' des Stützsteges 8' weniger als halb so groß ist wie die Breite L' eines Kopfabschnittes 9'.

Auch die Nuten 4' sind im Querschnitt im Wesentlichen pilzkopfförmig ausgebildet, wobei die Nuten 4' einen verjüngten Halsabschnitt 6' umfassen, der sich zu einem Nutboden 7' hin aufweitet. Die Breite b' des verjüngten Halsabschnittes 6' ist weniger als halb so groß wie die Breite B' in einem Bereich zwischen Nutboden 7' und dem verjüngten Halsabschnitt 6'.

Das Paneel 1' weist an einer ersten Oberfläche Rippen 3' auf, die eine gewölbte Oberfläche 5' aufweisen, wobei die Wölbung in einem Bereich zwischen 15 mm und 18 mm liegt. Auf einer gegenüberliegenden zweiten Oberfläche sind ebenfalls Rippen 3" ausgebildet, die in Figur 4 an der Unterseite angeordnet sind, aber wahlweise bei der Verlegung auch an der Oberseite vorgesehen werden können. Die Rippen 3" sind anders profiliert als die Rippen 3'. Die Rippen 3" besitzen eine größere Breite, so dass auf der in Figur 4 unteren Seite eine geringere Anzahl an Rippen 3" vorgesehen ist als an der Oberseite Rippen 3'. Ein Kopfabschnitt 9" der Rippen 3" ist mehr als doppelt so breit wie ein Stützsteg 8" und in ähnlicher Weise ist auch ein verjüngter Halsabschnitt 6" an der Nut 4" weniger als halb so breit als ein Bereich zwischen dem Halsabschnitt 6" und einem abgerundeten Nutboden 7".

Durch die Nuten 4, 4' und 4" wird einerseits ein leichteres Ablaufen von Flüssigkeit ermöglicht, die sich am Nutboden 7, 7', 7" sammelt und dann bei geringem Gefälle abfließen kann. Zudem besitzen die Nuten 4, 4', 4" eine Kühlungsfunktion, denn der verbreiterte Kopfabschnitt 9, 9', 9" wird belüftet, wobei ein Teil der Nut 4, 4', 4" verschattet ist und sich daher nicht so stark aufheizt.

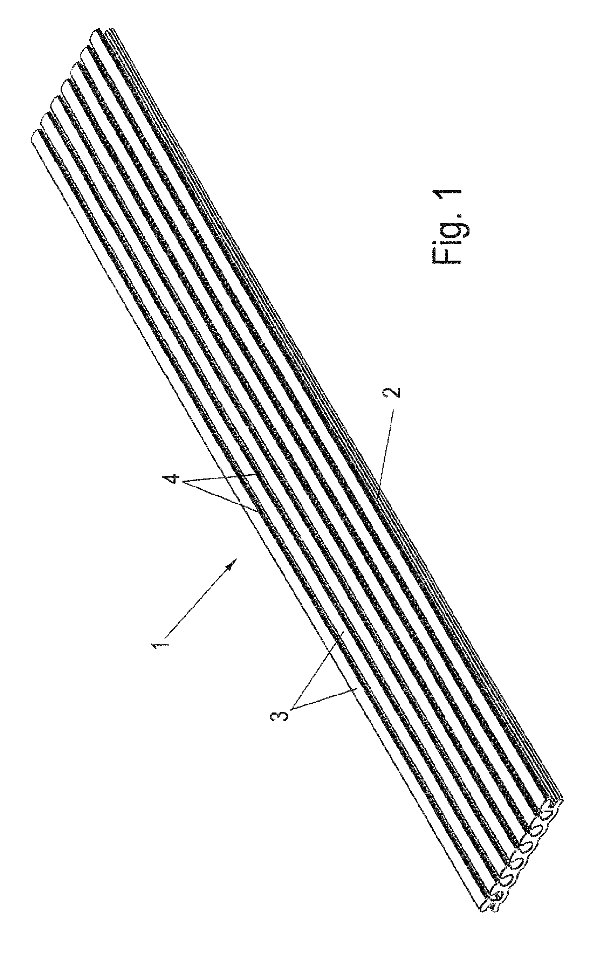

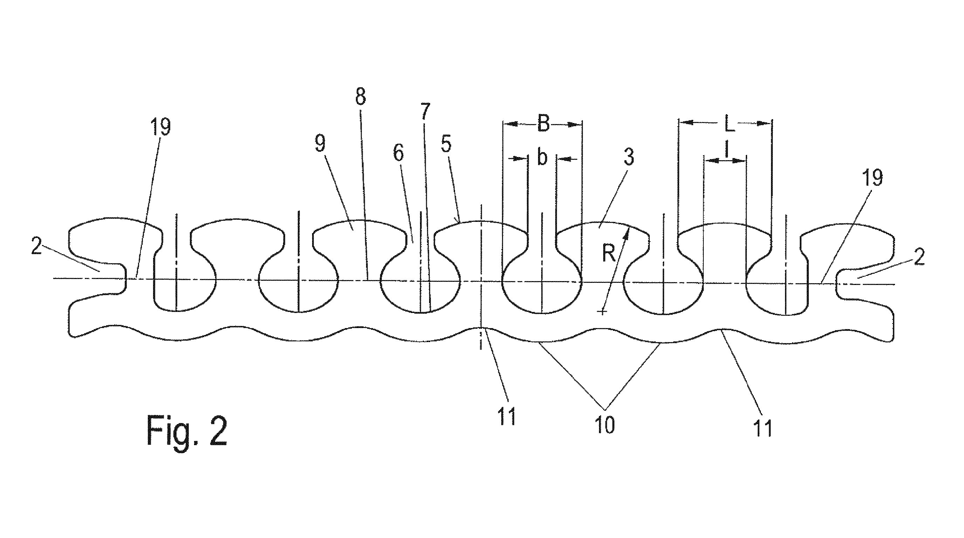

Während bei dem in dem Figuren 1 und 2 gezeigten Ausführungsbeispiel an einer Seite keine Nuten zur Verbindung der Rippen 10 vorgesehen sind, sind die Rippen 3' und 3' an einem gemeinsamen Mittelsteg 15 gehalten, so dass bezogen auf das Volumen des Paneels 1' nur ein geringer Materialeinsatz erforderlich ist.

Die gewölbte Oberfläche 5, 5', 5" der Rippen 3, 3', 3" kann nach dem Extrudieren noch nachbehandelt sein, insbesondere durch Bürsten, so dass eine leicht geraute Oberfläche eine besonders angenehme Haptik erzeugt.

## Patentansprüche

1. Paneel (1, 1') für einen Boden- oder Wandbelag aus einem extrudierten Formkörper aus einer Mischung aus Naturfasern und einem Polymerwerkstoff, wobei das Paneel (1, 1') mindestens an einer Oberfläche eine Vielzahl parallel angeordneter Rippen (3, 3', 3", 10) aufweist, **dadurch gekennzeichnet, dass** die Rippen (3, 3', 3", 10) eine nach außen gewölbte Oberfläche (5, 5', 5") besitzen, wobei die Wölbung der Rippen (3, 3', 3", 10) einen Radius von mehr als 10 mm aufweist.

2. Paneel nach Anspruch 1, **dadurch gekennzeichnet, dass** die Rippen (3, 3', 3", 10) einen Radius von mehr als 14 mm aufweisen.

3. Paneel nach Anspruch 1 oder 2, **dadurch gekennzeichnet, dass** die Wölbung der Rippen (3, 3', 3", 10) in einem Bereich zwischen 10 mm bis 40 mm, insbesondere zwischen 15 mm bis 30 mm, liegt.

4. Paneel nach einem der vorhergehenden Ansprüche, **dadurch gekennzeichnet, dass** benachbarte Rippen (3, 3', 3") jeweils über eine Nut (4, 4', 4") voneinander getrennt sind.

5. Paneel nach Anspruch 4, **dadurch gekennzeichnet, dass** die Nut (4, 4', 4") einen verjüngten Halsabschnitt (6, 6', 6") aufweist und sich zu einem Nutboden (7, 7', 7") hin aufweitet.

6. Paneel nach Anspruch 4 oder 5, **dadurch gekennzeichnet, dass** die Nut (4, 4', 4") im Wesentlichen pilzkopfförmig ausgebildet ist.

7. Paneel nach einem der Ansprüche 4 bis 6, **dadurch gekennzeichnet, dass** die Breite der Nut (4, 4', 4") im Bereich des Halsabschnittes (6, 6', 6") weniger als 60 %, vorzugsweise weniger als 50 % der Breite der Nut (4, 4', 4") in einem Bereich zwischen Nutboden (7, 7", 7") und Halsabschnitt (6, 6', 6") ist.

8. Paneel nach einem der Ansprüche 5 bis 7, **dadurch gekennzeichnet, dass** die Breite des verjüngten Halsabschnittes (6, 6', 6") kleiner als 10 mm, vorzugsweise kleiner als 7 mm, ist.

9. Paneel nach einem der Ansprüche 4 bis 8, **dadurch gekennzeichnet, dass** der Nutboden (7, 7', 7") gerundet ausgebildet ist.

10. Paneel nach einem der vorhergehenden Ansprüche, **dadurch gekennzeichnet, dass** die Rippen (3, 3', 3") im Querschnitt pilzkopfförmig ausgebildet sind.

11. Paneel nach einem der vorhergehenden Ansprüche, **dadurch gekennzeichnet, dass** das Paneel (1, 1') auf der zu der Oberfläche gegenüberliegenden Seite ebenfalls eine Vielzahl parallel angeordneter Rippen (3, 3', 3", 10) aufweist, die eine nach außen gewölbte Oberfläche (5, 5', 5") aufweisen.

12. Paneel nach Anspruch 11, **dadurch gekennzeichnet, dass** an gegenüberliegenden Seiten im Querschnitt pilzkopfförmige Rippen (3, 3', 3") vorgesehen sind, die integral mit einem Mittelsteg (15) ausgebildet sind.

13. Paneel nach Anspruch 12, **dadurch gekennzeichnet, dass** der Mittelsteg (15) eine Dicke von weniger als 9 mm, insbesondere weniger als 7 mm aufweist.

14. Paneel nach einem der vorhergehenden Ansprüche, **dadurch gekennzeichnet, dass** benachbarte Rippen (10) über eine konkave Wölbung (11) miteinander verbunden sind.

15. Paneel nach Anspruch 14, **dadurch gekennzeichnet, dass** die konkave Wölbung einen Radius aufweist, der weniger als 60 %, vorzugsweise weniger als 50 %, des Radius der konvexen Wölbung nach außen beträgt.

16. Paneel nach einem der vorhergehenden Ansprüche, **dadurch gekennzeichnet, dass** die Oberfläche der Rippen (3, 3', 3", 10) gebürstet ist.
